# EUROPEAN PATENT SPECIFICATION

(11) **EP 0 637 609 B1**
(45) Date of publication and mention of the grant of the patent: **09.12.1998**
(21) Application number: 94305519.4
(22) Date of filing: 26.07.1994
(51) Int. Cl.: C08K 5/00, C08L 69/00, C08K 5/523

(54) **Flame-retardant aromatic polycarbonate resin**
Flammgehemmtes aromatisches Polycarbonatharz
Résine de polycarbonate aromatique ignifugée

(30) Priority: 27.07.1993 JP 184839/93
(43) Date of publication of application: 08.02.1995
(73) Proprietor: Teijin Chemicals, Ltd., Tokyo 100 (JP)
(72) Inventor: Miyouga, Masahiro, Onsen-gun, Ehemi-ken (JP); Souda, Shinichi, Iwakuni-shi, Yamaguchi-ken (JP)
(74) Representative: Votier, Sidney David

(56) References cited:
- EP-A- 0 333 694
- US-A- 3 775 367
- US-A- 4 174 359
- US-A- 5 045 582

## Description

### Field of Industrial Utilization

The present invention relates to a flame-retardant aromatic polycarbonate resin composition and a molded article therefrom. More specifically, it relates to an aromatic polycarbonate resin composition which is remarkably free from corroding a molding machine and a processing machine, retains excellent properties inherent to an aromatic polycarbonate resin and has excellent flame retardancy, and a molded article formed therefrom.

### Prior Art

Having many excellent properties, an aromatic polycarbonate resin is widely used in a large amount in a variety of fields. Since, however, an aromatic polycarbonate resin is combustible, it is required to have severe flame retardancy in some fields. For imparting an aromatic polycarbonate resin with flame retardancy, there is known a conventional method in which an organic halogen compound is incorporated into the aromatic polycarbonate resin. For example, Japanese Patent Publication No. 47-44537 discloses a method in which a polycarbonate oligomer obtained from tetrabromobisphenol A as a dihydroxy component is incorporated in such an amount that the bromine concentration is 5 to 15 % by weight. Japanese Patent Publication No. 47-24660 discloses a method in which a carbonate copolymer obtained from tetrabromobisphenol A and bisphenol A as dihydroxy components is incorporated in such an amount that the bromine concentration is 5 to 9 % by weight. However, when a flame-retardant aromatic polycarbonate resin composition containing such a bromine-based flame retardant is molded or processed, a molding machine or a processing machine is liable to be corroded, and the corrosion is intensified with an increase in the bromine concentration. It is therefore desired to develop an aromatic polycarbonate resin which is free from corroding a molding machine and a processing machine and has excellent flame retardancy.

Further, there is known a method in which a bromine-free flame retardant is incorporated into an aromatic polycarbonate resin. Japanese Patent Publication No. 47-40445 discloses a method in which potassium perfluoroalkanesulfonate is incorporated into an aromatic polycarbonate resin. According to this method, the amount of corrosive toxic gas decreases, while the resin composition shows a decrease in heat stability when the resin composition contains the potassium perfluoroalkanesulfonate in a sufficient amount for exhibiting adequate flame retardancy.

US-3775367 and US-4174359 also disclose the addition of alkali metal perfluoroalkane sulfonates to polycarbonate resin compositions. US-5045582 discloses a polycarbonate resin composition comprising a conventional polycarbonate resin having a viscosity-average molecular weight of 10,000-30,000, an ultra-high molecular weight polycarbonate resin having a viscosity average molecular weight of 100,000 to 250,000 and a fire retardant which may comprise compounds such as halo-substituted aromatic compounds and sulfonic acid alkali metal salts.

### Problems to be Solved by the Invention

It is an object of the present invention to provide an aromatic polycarbonate resin composition which is remarkably free from corroding a molding machine and a processing machine, retains excellent properties inherent to an aromatic polycarbonate resin and has excellent flame retardancy, and a molded article formed therefrom.

For achieving the above object, the present inventors have made diligent studies and as a result have found the following: When a combination of potassium perfluoroalkanesulfonate with a small amount of halogenated triarylphosphate is incorporated into an aromatic polycarbonate resin, the aromatic polycarbonate resin can be imparted with excellent flame retardancy, and the amount of the potassium perfluoroalkanesulfonate can be decreased. Thus, the present invention has been accomplished.

### Means to Solve the Problems

According to the studies of the present inventors, the above object and advantages of the present invention are achieved by a flame-retardant aromatic polycarbonate resin composition comprising 100 parts by weight of an aromatic polycarbonate resin which has a viscosity-average molecular weight of 10,000 - 50,000, 0.01 to 1 parts by weight of (a) a perfluoroalkanesulfonic acid alkali salt and 0.02 to 3 parts by weight of (b) a halogenated triaryl phosphate of the formula [1], 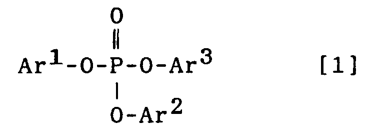 wherein each of Ar¹, Ar² and Ar³ is independently an aromatic hydrocarbon group, and at least one halogen atom is substituted on ring-forming carbon(s) of each aromatic hydrocarbon group.

The resin composition of the present invention will be detailed hereinafter.

The aromatic polycarbonate resin used in the resin composition of the present invention may be any known molding aromatic polycarbonate resin which has a viscosity-average molecular weight of 10,000 - 50,000, and it shall not be further limited. For example, as an aromatic polycarbonate resin, there may be used an aromatic polycarbonate resin obtained by reacting a dihydric phenol with a carbonate precursor by a solution method or a melting method.

Examples of the above dihydric phenol include 2,2-bis(4-hydroxyphenyl)propane (to be referred to as "bisphenol A" hereinafter), bis(4-hydroxyphenyl)methane, 2,2-bis(4-hydroxy-3,5-dimethylphenyl)propane, 2,2-bis(4-hydroxy-3,5-dibromophenyl)propane, 2,2-bis(4-hydroxy-3-methylphenyl)methane, 1,1-bis(4-hydroxyphenyl)cyclohexane, bis(4-hydroxyphenyl)sulfide and bis(4-hydroxyphenyl)sulfone. These dihydric phenols may be substituted with an alkyl group or an aryl group. These dihydric phenols may be used alone or in combination. Of these, bisphenol A is preferred. Examples of the above carbonate precursor include carbonyl halides, diaryl carbonates and haloformates, and specific examples thereof include phosgene, diphenyl carbonate and dihaloformate of a dihydric phenol. The molecular weight of the aromatic polycarbonate resin is not specially limited, while the viscosity-average molecular weight of the aromatic polycarbonate resin is generally 10,000 to 50,000, preferably 15,000 to 40,000. For the production of the above aromatic polycarbonate resin, there may be used a generally known proper molecular weight regulating agent and a reaction-promoting catalyst as required.

Further, the aromatic polycarbonate resin used in the present invention may be any one of a branched polycarbonate resin obtained from a small amount of a polyfunctional compound as a comonomer component, a polyester carbonate resin obtained from a small amount of an aromatic or aliphatic difunctional carboxylic acid having at least 8 carbon atoms as a comonomer, and a mixture of at least two aromatic polycarbonate resins. For example, the aromatic polycarbonate resin used in the present invention may be a mixture of an aromatic polycarbonate resin having a regular molecular weight and an ultrahigh-molecular-weight aromatic polycarbonate resin having a viscosity-average molecular weight of at least 50,000.

In the resin composition of the present invention, the (a) perfluoroalkanesulfonic acid alkali salt (to be sometimes referred to as component (a) hereinafter) contains an alkyl group which preferably has 1 to 8 carbon atoms, more preferably 3 to 8 carbon atoms, and all the hydrogen atoms of the alkyl group are replaced by fluorine atoms. The alkali metal constituting the above alkali salt includes alkali metals and an alkaline earth metals, and preferred are alkali metals such as potassium and sodium. Specific examples of the component (a) preferably include potassium perfluorobutanesulfonate and sodium perfluorooctanesulfonate. When the amount of the component (a) is too small, it is difficult to accomplish sufficient flame retardancy even if the halogenated triaryl phosphate to be described later is incorporated in combination. When the amount of the component (a) is too large, the heat stability of the resin composition is low. The amount of the component (a) per 100 parts by weight of the aromatic polycarbonate resin is 0.01 to 1 part by weight.

The resin composition of the present invention further contains other component, i.e., a halogenated triaryl phosphate (to be sometimes referred to as "component (b) hereinafter) of the following formula [1],

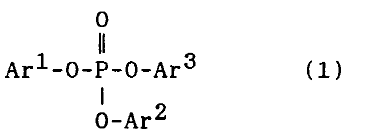

In the formula [1], each of Ar¹, Ar² and Ar³ is independently an aromatic hydrocarbon group, and at least one halogen atom is substituted on ring-forming carbon of each aromatic hydrocarbon group.

The above aromatic hydrocarbon has 6 to 20 carbon atoms, preferably 6 to 18 carbon atoms. Specifically, preferred examples of the aromatic hydrocarbon includes a benzene ring, a naphthalene ring and a diphenyl ring of 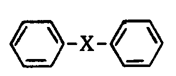 in which X is -CH₂, -O-, -C(O)-, -S-, -SO₂-, an alkylidene group having 2 to 6 carbon atoms or a cycloalkylidene group having 3 to 6 carbon atoms. A benzene ring is particularly preferred. In each of the hydrocarbons, at least one halogen atom is substituted on ring-forming carbon(s). The halogen atom includes chlorine, bromine, fluorine and iodine. Chlorine and bromine are preferred, bromine is particularly preferred. Further, the numbe of halogen atoms substituted on each aromatic hydrocarbon is preferably 1 to 5, more preferably 1 to 3. Each hydrocarbon group may further contain other substituent such as lower alkyl, aryl, aralkyl or aryloxy.

Specific examples of the aromatic hydrocarbons (Ar¹, Ar² and Ar³) include 2,4,6-tribromophenyl, 2,4-dibromophenyl, 4-bromophenyl, 4-chloro-2,6-dibromophenyl, 2,4-dichloro-6-bromophenyl, 2,6-dibromo-4-methylphenyl, 2,4,6-trichlorophenyl, 2,4-dichloroohenyl, 4-chlorophenyl and 2,6-dichloro-4-phenylphenyl.

The amount of the halogenated triaryl phosphate (component (b)) of the formula [1] per 100 parts by weight of the aromatic polycarbonate resin is 0.02 to 3 parts by weight. When the amount of the component (b) is less than 0.01 part by weight, it is difficult to impart the aromatic polycarbonate resin with adequate flame retardancy.

The halogenated triaryl phosphate (component (b)) is preferably free of impurities such as salts and phosphate ester halides. When the amount of these impurities is too large, the flame-retardant aromatic polycarbonate resin composition becomes turbid or shows decreased transparency, or it shows decreased heat resistance. As a result, it shows dull in hue in melt-molding.

The salts as the above impurities include alkali metal and alkaline earth metal halides such as sodium chloride and calcium chloride, alkali metal and alkaline earth metal phosphates such as sodium phosphate and calcium phosphate, and alkali metal and alkaline earth metals salts of partial phosphoric acid phenyl ester. Examples of the phosphate ester halide include halides of phosphoric acid monophenyl ester and phosphoric acid diphenyl ester.

The content of the above impurities in the halogenated triaryl phosphate is not more than 3 % by weight, preferably not more than 0.5 % by weight.

Commercially available halogenated triaryl phosphate generally contains a large amount of the above impurities. For using commercially available halogenated triaryl phosphate, it is required to improve the purity thereof by repeating its recrystallization. The purity of halogenated triaryl phosphate can be increased by any known method, while a halogenated triaryl phosphate whose impurity content is remarkably low can be synthesized, for example, by the following method, in which the amount of the above impurities can be remarkably decreased and the halogenated triaryl phosphate obtained has a purity suitable for use in the present invention.

That is, the halogenated triaryl phosphate of the formula [1] can be obtained as follows. At least one compound of the formula, HO-Ar (in which Ar has the same meaning as Ar¹, Ar² or Ar³) and phosphorus pentachloride are allowed to react at a temperature between -30°C and 200°C in the substantial absence of a catalyst to form a chlorophosphorane compound, and the chlorophosphorane compound and any one of water, an alcohol, an alcohol aqueous solution or an alkaline solution are allowed to react at a temperature between -30°C and 100°C to form the halogenated triaryl phosphate of the formula [1].

The resin composition of the present invention can be produced by any method. For example, the perfluoroalkanesulfonic acid alkali salt (component (a)) and the halogenated triaryl phosphate (component (b)) are mixed in advance, and the mixture is added to the aromatic polycarbonate resin. Or, any one of the component (a) and the component (b) is first added to the aromatic polycarbonate resin, and then the remaining component (a) or (b) is added. Then, these components (a) and (b) and the aromatic polycarbonate resin are mixed, for example, with a super mixer or a tumbler.

The so-obtained composition may be formed into pellets with an extruder. The above composition as such or the pellets thereof are molded into a molded article by a general injection molding method, extrusion molding method or compression molding method. The so-obtained molded article has excellent flame retardancy while retaining excellent properties inherent to the aromatic polycarbonate resin.

The resin composition of the present invention may further contain 0.01 to 2 % by weight of a fluorine resin, so that the dripping at a combustion time can be prevented and that the resin composition can be further improved in flame retardancy. The fluorine resin includes polytetrafluoroethylene, a tetrafluoroethylene-hexafluoropropylene copolymer, a tetrafluoroethylene-perfluoroalkylvinylether copolymer, a tetrafluoroethylene-ethylene copolymer, polychlorotrifluoroethylene, polyvinylidene fluoride, polyvinyl fluoride and a vinylidene fluoridehexafluoropropylene copolymer.

The resin composition of the present invention may further contain additives generally incorporated into resin molding materials, such as a mold releasing agent, an antistatic agent, a photostabilizer, an antioxidant, a reinforcing material, a foaming agent, a pigment, a dye and an inorganic filler.

The mold releasing agent includes pentaerythritol tetrastearate, pentaerythritol tetrapelarogonate, steary stearate, behenic behenate, stearyl mono-, di- or triglyceride, sorbitan monostearate, paraffin wax, beeswax, polydimethylsiloxane and phenyl-containing dimethylsiloxane. The amount of the mold releasing agent is generally 0.001 to 5 % by weight.

The antistatic agent includes glycerin monostearate, dodecylbenzenesulfonic acid ammonium salt, dodecylbenzenesulfonic acid phosphonium salt, Hi-Boron LB-120 (supplied by Boron International), maleic anhydride mono- or diglyceride, graphite and a metal powder. The amount of the antistatic agent is generally 0.1 to 10 % by weight.

The photostabilizer includes 2-(2-hydroxy-5-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α, α-dimethylbenzyl)phenyl]-2H-benzotriazole, 2,2,-methylenebis(4-cumyl-6-benzotriazolephenyl), 2,2'-p-phenylenebis(3,1-benzoxazin-4-one) and polyalkylene naphthalate. The amount of the photostabilizer is generally 0.01 to 5 % by weight.

The antioxidant includes phosphoric acid and an ester thereof, phosphorous acid or an ester thereof, pentaerythritoltetrakis(3-mercaptopropionate), pentaerythritoltetrakis(3-laurylpropionate), glycerol-3-stearylthiopropionate, octadecyl-3-(3,5-di-tert-butyl-4-hydroxyphenyl)propionate, tris(2,4-di-tert-butylphenyl)phosphite, and tetrakis(2,4-di-tert-butylphenyl)-4,4'-biphenylenephosphonate. The amount of the antioxidant is generally 0.001 to 10 % by weight.

The reinforcing material includes a metal fiber, a carbon fiber, a graphite fiber, an alumina fiber, a silicon nitride fiber, a potassium titanate whisker, a boron fiber, a wholly aromatic polyamide fiber, and a wholly aromatic polyester fiber. The amount of the reinforcing material is generally 1 to 60 % by weight.

The present invention will be explained more in detail hereinafter with reference to Examples, in which "part" stands for "part by weight", and samples were measured for flame retardancy according to Subject 94 (UL-94) of Underwriters Laboratory.

### Examples 1 - 3 and Comparative Examples 1 and 2

100 Parts of a fine powder of an aromatic polycarbonate resin which was obtained from bisphenol A, p-tert-butylphenol as a molecular weight regulator and phosgene and had a viscosity-average molecular weight of 22,000 by a conventional method, potassium perfluorobutanesulfonate in an amount shown in Table 1 and tris(2,4,6-tribromophenyl)phosphate in an amount shown in Table 1 were mixed with a tumbler for 10 minutes, and the mixture was dried in a hot-air circulating dryer at 120°C for 6 hours. The dry mixture was pelletized with a 30 φ extruder at a cylinder temperature of 280°C, and the resultant pellets were dried at 120°C for 4 hours. Then, the dry pellets were injection-molded with a 5-oz (141.5 g) injection molding machine (supplied by Sumitomo Nestar) at 290°C to prepare 20 sample pieces (125 mm x 13 mm x 3 mm), and the samples were evaluated for flame retardancy. Table 1 shows the results.

### Examples 4 - 6 and Comparative Examples 3 and 4

Samples were prepared in the same manner as in Example 1 except that the fine powder of an aromatic polycarbonate resin was replaced with a fine powder of an aromatic polycarbonate resin which was obtained from bisphenol A, p-tert-butylphenol as a molecular weight regulator and phosgene by a conventional method and had a viscosity-average molecular weight of 30,000. The samples were evaluated for flame retardancy, and Table 1 shows the results.

The abbreviations used in Table 1 stand for the following.
PC: aromatic polycarbonate resin
P-1: fine powder of aromatic polycarbonate resin having a viscosity-average molecular weight of 22,000.
P-2: fine powder of aromatic polycarbonate resin having a viscosity-average molecular weight of 30,000.
Component (a): potassium perfluorobutanesulfonate
Component (b): tris(2,4,6-tribromophenyl)-phosphate

**Table 1**

| | PC | | Flame retardant | | Flame retardancy (UL-94V) | | |
|---|---|---|---|---|---|---|---|
| | kind | Amount (part) | Component (a) part | Component (b) (part) | Average combution time (second) | Cotton ignited by flaming particles or drops | Evaluation |
| Ex.1 | P-1 | 100 | 0.05 | 0.1 | 4.0 | No | V-0 |
| Ex.2 | P-1 | 100 | 0.07 | 0.07 | 3.2 | No | V-0 |
| Ex.3 | P-1 | 100 | 0.1 | 0.05 | 2.8 | No | V-0 |
| CEx.1 | P-1 | 100 | 0.1 | - | 3.3 | Yes | V-2 |
| CEx.2 | P-1 | 100 | - | 0.1 | 3.0 | Yes | V-2 |
| Ex.4 | P-2 | 100 | 0.05 | 0.1 | 4.6 | No | V-0 |
| Ex.5 | P-2 | 100 | 0.07 | 0.07 | 3.8 | No | V-0 |
| Ex.6 | P-2 | 100 | 0.1 | 0.05 | 3.2 | No | V-0 |
| CEx.3 | P-2 | 100 | 0.1 | - | 3.5 | Yes | V-2 |
| CEx.4 | P-2 | 100 | - | 0.1 | 3.8 | Yes | V-2 |

### Comparative Examples 5 and 6

Samples were prepared in the same manner as in Example 1 or Example 4 except that the potassium perfluorobutanesulfonate and tris(2,4,6-tribromophenyl)phosphate were replaced with a polycarbonate oligomer produced from tetrabromobisphenolm A as a dihydroxy component. The samples in Comparative Example 5 showed the flame retardancy as follows. Average combustion time: 3.7 to 3.8 seconds, cotton ignited by flaming particles or drops: yes, and flame retardancy: V-2. The samples in Comparative Example 6 showed the flame retardancy as follows. Average combustion time: 4.0 to 4.1 seconds, cotton ignited by flaming particles or drops: yes, and flame retardancy: V-2.

### Corrosion test

30 Grams of pellets prepared in each Example were placed in a container, and a finish-polished corrosion test piece (material S55C, dimensions 10 mm wide, 15 mm long and 5 mm thick) was also placed therein. The test piece in the container was heat-treated at 330°C for 240 minutes. The heat-treated test piece was visually evaluated for a corrosion state (occurrence of rust) on the surface. Table 2 shows the results.

**Table 2**

| | PC | | Flame retardant | | | Evaluation on corrosion |
|---|---|---|---|---|---|---|
| | kind | Amount (part) | Component | | | |
| | | | (a) | (b) | (c)* | |
| Ex.1 | P-1 | 100 | 0.05 | 0.1 | 0 | No rust |
| Ex.2 | P-1 | 100 | 0.07 | 0.07 | 0 | No rust |
| Ex.3 | P-1 | 100 | 0.1 | 0.05 | 0 | No rust |
| Ex.4 | P-2 | 100 | 0.05 | 0.1 | 0 | No rust |
| Ex.5 | P-2 | 100 | 0.07 | 0.07 | 0 | No rust |
| Ex.6 | P-2 | 100 | 0.1 | 0.05 | 0 | No rust |
| CEx.5 | P-1 | 100 | 0 | 0 | 5 | Reddish brown rust occurred |
| CEx.6 | P-2 | 100 | 0 | 0 | 5 | Reddish brown rust occurred |

| | | | | | | |
|---|---|---|---|---|---|---|
| * Component (c) = polycarbonate oligomer from tetrabromobisphenol A as dihydroxy component | | | | | | |

The resin composition of the present invention and molded articles therefrom contain a very small amount of the flame retardants but has excellent flame retardancy. Therefore, it produces industrially excellent effects. That is, it retains the excellent properties inherent to aromatic polycarbonate resins and is free from corroding a molding machine and a processing machine.

## Claims

1. A flame-retardant aromatic polycarbonate resin composition comprising 100 parts by weight of an aromatic polycarbonate resin which has a viscosity-average molecular weight of 10,000 to 50,000, 0.01 to 1 part by weight of (a) a perfluoroalkanesulfonic acid alkali salt and 0.02 to 3 parts by weight of (b) a halogenated triaryl phosphate of the formula [1]: 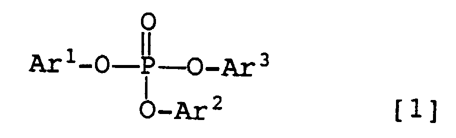 wherein each of Ar¹, Ar² and Ar³ is independently an aromatic hydrocarbon, and at least one halogen atom is substituted with the ring-forming carbon of each aromatic hydrocarbon group.

2. The composition of claim 1, wherein the aromatic polycarbonate resin is a polycarbonate produced from 2,2-bis(4-hydroxyphenyl)propane as a dihydric component.

3. The composition of claim 1, wherein the perfluoroalkanesulfonic acid alkali salt is a potassium salt or sodium salt of perfluoroalkanesulfonic acid having 1 to 8 carbon atoms.

4. The composition of claim 1, wherein the halogenated triaryl phosphate is brominated and/or chlorinated triphenyl phosphate.

5. A molded article formed from the aromatic polycarbonate resin composition as recited in claims 1, 2, 3 or 4.

## Patentansprüche

1. Flammenhemmende Zusammensetzung von aromatischem Polycarbonatharz, umfassend 100 Gew.-Teile eines aromatischen Polycarbonatharzes, welches ein Viskositätsmittel des Molekulargewichts von 10.000 bis 50.000 aufweist, 0,01 bis 1 Gew.-Teil eines (a) Alkalisalzes einer Perfluoralkansulfonsäure und 0,02 bis 3 Gew.-Teile von (b) einem halogenierten Triarylphosphat der Formel [1]: 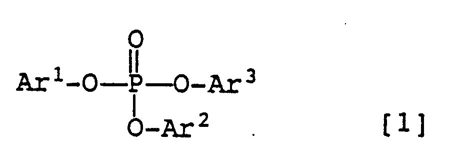 worin Ar¹, Ar² und Ar³ jeweils unabhängig voneinander ein aromatischer Kohlenwasserstoff sind und jede aromatische Kohlenwasserstoffgruppe mindestens am Ring-bildenden Kohlenstoff mit mindestens einem Halogenatom substituiert ist.

2. Zusammensetzung nach Anspruch 1, wobei das aromatische Polycarbonatharz ein Polycarbonat ist, hergestellt aus 2,2-Bis-(4-hydroxyphenyl)propan als Komponente mit 2 Hydroxylgruppen.

3. Zusammensetzung nach Anspruch 1, wobei das Alkalisalz der Perfluoralkansulfonsäure ein Kaliumsalz oder Natriumsalz einer Perfluoralkansulfonsäure mit 1 bis 8 Kohlenstoffatomen ist.

4. Zusammensetzung nach Anspruch 1, wobei das halogenierte Triarylphoshat bromiertes und /oder chloriertes Triphenylphosphat ist.

5. Formgegenstand, gebildet aus der aromatischen Polycarbonatharzzusammensetzung, wie in den Ansprüchen 1, 2, 3 oder 4 angegeben.

## Revendications

1. Composition de résine de polycarbonate aromatique retardatrice de combustion comprenant 100 parties en poids d'une résine de polycarbonate aromatique qui a une masse moléculaire moyenne en viscosité de 10 000 à 50 000, 0,01 à 1 partie en poids de (a) un sel alcalin d'acide perfluoroalcanesulfonique et 0,02 à 3 parties en poids de (b) un phosphate de triaryle halogéné de formule [1]: 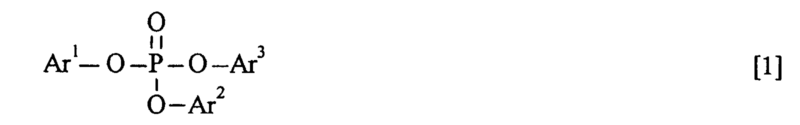 dans laquelle chacun de Ar¹, Ar² et Ar³ est indépendamment un hydrocarbure aromatique, et l'atome de carbone formant un cycle de chaque groupe hydrocarboné aromatique est substitué par au moins un atome d'halogène.

2. Composition selon la revendication 1, dans laquelle la résine de polycarbonate aromatique est un polycarbonate produit à partir de 2,2-bis(4-hydroxyphényl)propane en tant que composant divalent.

3. Composition selon la revendication 1, dans laquelle le sel alcalin d'acide perfluoroalcanesulfonique est un sel de potassium ou un sel de sodium d'un acide perfluoroalcanesulfonique ayant de 1 à 8 atomes de carbone.

4. Composition selon la revendication 1, dans laquelle le phosphate de triaryle halogéné est du phosphate de triphényle bromé et/ou chloré.

5. Article moulé formé à partir de la composition de résine de polycarbonate aromatique selon la revendication 1, 2, 3 ou 4.
